# EUROPEAN PATENT APPLICATION

(11) **EP 0 972 962 A2**
(43) Date of publication of application: **19.01.2000**
(21) Application number: 99113659.9
(22) Date of filing: 14.07.1999
(51) Int. Cl.: F16C 33/78

(54) **Sealing device for a roller contact bearing**

(30) Priority: 14.07.1998 IT TO980615
(71) Applicant: SKF INDUSTRIE S.p.A., I-10123 Torino (IT)
(72) Inventor: Vignotto, Angelo, 10134 Torino (TO) (IT); Marivo, Massimo, 10060 Airasca (TO) (IT)
(74) Representative: Lotti, Giorgio

(57) **Abstract**

Sealing device (30) for a rolling contact bearing (1) having a rotating portion (13) and a fixed portion (22) to be integrally mounted to a fixed race (2) of the bearing (1) and to be coupled to the rotating portion (13) itself; a snapping positioning device (46) to position the fixed and rotating portion (12, 13) in relation to one another, and presenting an elastic yieldable lip (36) associated with the fixed portion (12), and a rigid matching means (41) and a receiving seat (42) associated with the said rotating means (13), and the seat houses the said elastic lip (36) itself.

## Description

The present invention refers to a sealing device for a rolling contact bearing comprising a rotating race and a fixed race mounted coaxially in relation to each other and to an axis of rotation.

In the rolling contact bearing industry, there is a tendency to integrate sealing devices in relation to each other between the races of the bearings, and the devices for measuring the rotation speed of the races themselves, or rather there s a tendency to render a magnetised phonic wheel of the measuring device an integral part of the relative sealing device.

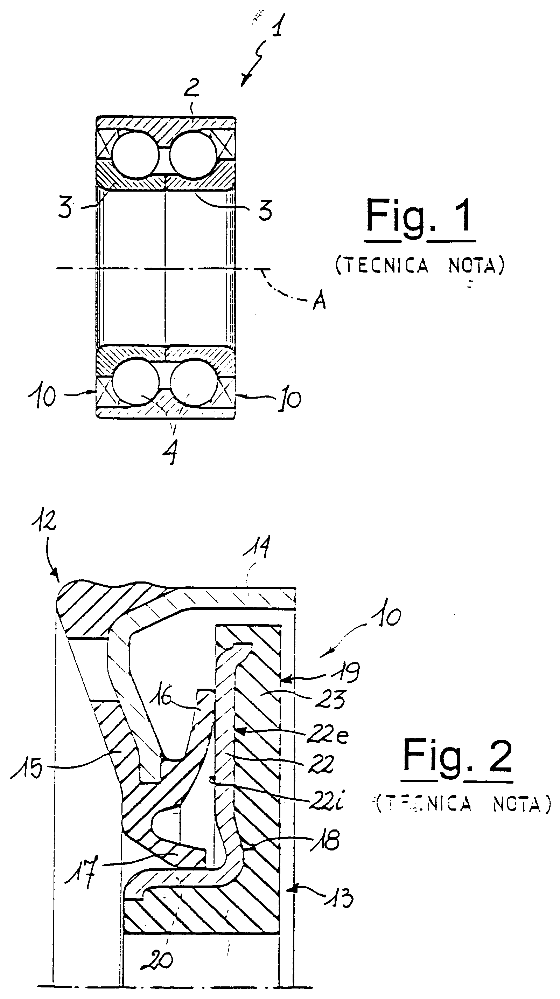

Figure 1 illustrates an example of this well-known technique, in which the rolling bearing device 1, composed of a an external fixed race 2 presenting an axis A, of an internal rotating race 3 coaxially mounted to the fixed race 2 itself, and of a number of rolling spheres 4 interposed between the two races 2 and 3, presents two sealing devices 10 arranged on both sides of the bearing 1 itself to hermetically seal the space between the races 2 and 3.

As is much better illustrated in Figure 2, each sealing device 10 is defined by a fixed portion 12 and a moving portion 13, of which the portion 12 is mounted on the race 2, while the portion 13 is mounted on the race 3 subsequent to the portion 12 so as to be coupled to the portion 12 itself. The portion 12 comprises an annular metallic insert 14, which is welded to the race 2, and an annular sealing covering 15 presenting pair of lips 16, 17 arranged in sliding contact with an annular metallic insert 18; the portion 13 comprises, as well as the insert 18, an annular rubber element which is vulcanised onto the insert 18 itself.

The insert 18 is driven onto the race 3 once it has been fitted with the element 19, and it presents a substantially L-shaped axial section, and is defined by a cylindrical wall 20, against which slides the lip 16 (defined here as radial), and a disc-shaped radial wall 22, which presents an axially external surface 22e turned towards the exterior of the bearing 1, and an axially internal surface 22i against which slides the lip 17 (defined here as axial). Instead, the rubber element 19 comprises a portion 23 which is loaded with magnetic particles and arranged as a covering of the surface 22e to constitute a phonic wheel which, rotating together with the race 3, generates impulses with a frequency proportional to the rotation speed of the race 3 itself in a fixed sensor (which is not illustrated for the sake of simplicity).

The sealing device which has just been described presents several drawbacks which are difficult to detect once it has been assembled to the bearing, and due to the fact that, for reasons of assembly, it is necessary to first drive the fixed portion 12 onto the fixed race 2 and, subsequently, the moving portion 13 onto the moving race 3 by forcibly pushing the portion 13 itself in the axial direction in such a way as to position the two inserts and the relative rubber parts in the configuration which is theoretically illustrated in Figure 2. Following the last described operation, it has been found, in the case of sealing devices which have yet to be assembled, that, in the majority of cases, although the radial lip 16 has been placed in a pre-assembly phase to slide in contact with the cylindrical wall 20, it has been intercepted by the wall 20 itself, and folded in a backwards direction towards the interior of the bearing configuring the sealing device in such a way as to be incorrect and to present an obstacle to the correct functioning thereof, and thus, in such a way as to result in a short working life of the bearing itself.

The aim of the present invention is to realise a sealing device for a rolling contact bearing, which will not always ensure the correct positioning of the relevant elements, in particular the lip of the sealing covering, and also render all the operations concerned with the assembly of the bearing much easier and faster.

According to the present invention a sealing device for a rolling contact bearing will be realised comprising a rotating race and a fixed race arranged coaxially in relation to each other and an axis of rotation, the device comprising a rotating portion to be mounted integrally to the rotating race, and a fixed portion to be mounted integrally to the fixed race and to be coupled to the rotating portion itself; the device being characterised by the fact of comprising snapping positioning means to position the said rotating and fixed portions in relation to each other, the positioning means comprising in the turn elastic yieldable means, and rigid matching means associated to the said rotating means.

The invention will now be described with reference to the attached drawings, which illustrate a non-limiting embodiment of the invention, in which:
- FIG. 1: is an axial section view of a rolling contact bearing provided with a sealing device of a well-known type;
- FIG. 2: is an enlarged view of the well-known type of sealing device illustrated in Figure 1;
- FIG. 3: is an axial section view, on an enlarged scale, of a first preferred form of embodiment of a sealing device according to the present invention assembled to a rolling contact bearing; and
- FIG. 4: is an axial section view, on an enlarged scale, of a second preferred form of embodiment of the sealing device illustrated in FIG. 4.

With reference initially to FIG. 1,

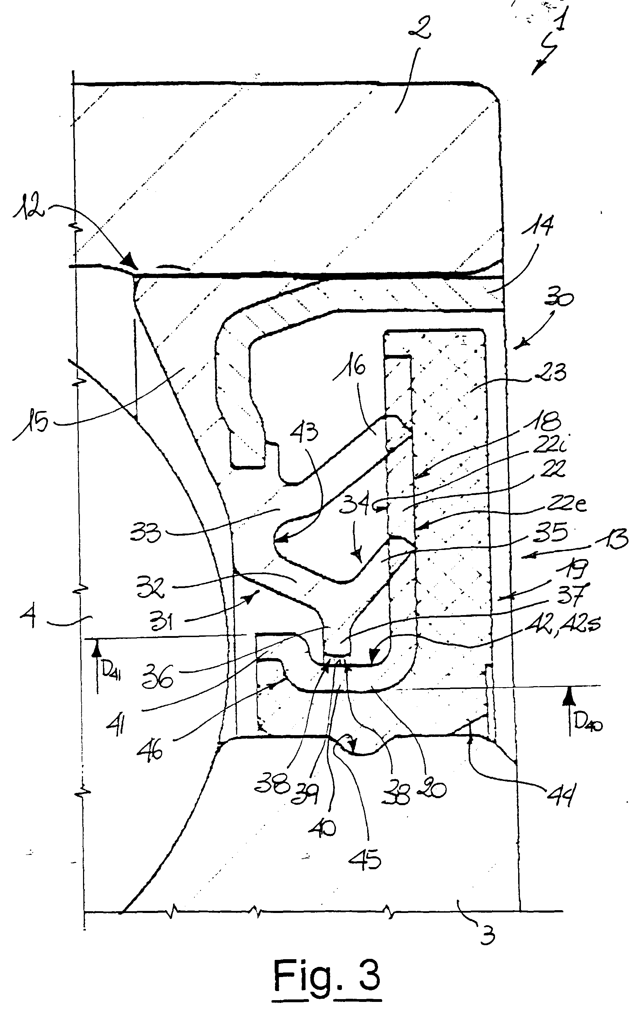

With initial reference to Figure 3, and using the same reference numbers to denote the same or similar parts as were used in the introductory section of the above description, the number 30 indicates a sealing device in its entirety which is suitable for being assembled on one side of the bearing 1 to hermetically seal the space between the races 2 and 3.

The sealing device 30 defines a substantial improvement in relation to the sealing device 10 which was described above by resolving the drawbacks discussed in the introduction, and the sealing device 30 differs from the sealing device 10 itself due to the fact that the lip 17 arranged in sliding contact with the annular metallic insert 18, is replaced by a lip 31 which is illustrated in Figure 3 in its un-deformed pre-assembly form. The lip 31 is substantially Y-shaped in axial section, and comprises a conical annular portion 32 which extends from the insert 14 and a base 33 of the lip 16 to progressively converge towards the insert 18, and a head portion 34 which is substantially V-shaped in axial section, said lip 31 is centrally connected to the portion 32.

The portion 34 comprises, in turn, a lip 35 which projects from the connection point of the portion 32 towards the wall 22 to slidingly contact the surface 22i of the wall 122 itself, and a radial lip 36, which, once the two portions 12 and 13 have been assembled in relation to each other and to the bearing 1, is arranged transversally to the A axis to slidingly contact the wall 20 of the insert 18 itself. The lip 36 presents, in correspondence to one of its own free ends 37 arranged in contact with the wall 20, two cylindrical notches 38 defining a disc-shaped tongue 39 in relation to each other, which is of a lesser axial thickness than the lip 36 itself, and is arranged in contact with the wall 20.

The insert 18 of the device 30 presents a substantially J-shaped axial section, and the relative wall 20 comprises a central cylindrical portion 40 presenting an external diameter D₄₀ which is substantially less than an internal diameter D₃₉ of the tongue 39, and an cylindrical end portion 41, which is fitted to the portion 40, presenting an external diameter D₄₁ which is greater than both the diameter D₄₀ and the diameter D₃₉, and which defines, together with the portion, 41 a receiving seat 42 for the lip 36 which is radially delimited by a cylindrical surface 42s with a diameter of D₄₀. The seat 42 and the lip 36 define, as will be better explained below, a snapping positioning means 46 of the portion 13 with the portion 12, in which the elastic yieldable means is defined by the lip 36, and the rigid matching device is defined by the portion 41: the positioning means is not only suitable for guaranteeing the correct assembly of the device 30, it also improves the sealing characteristics and the resistance to wear of the device 30 itself.

The lip 16 (which is illustrated in Figure 3 in its un-deformed pre-assembly form) and the lip 36 forma notch 43 in relation to each other, the dimensions of which are maximised in regard to notches of the well-known type with the aim of obtaining a greater space for the lubricating oil used for the sealing lips, and, from the above description, it is obvious that the lip 16 is suitable for avoiding the usual entry of contaminants into the interior of the bearing 1, due to the co-operation, in this case, of the lip 35, while the lip 36, as well as functioning as a seal for the lubricant, also guarantees the correct connection of the phonic wheel to the bearing 1. In fact, during the assembly of the device 30 to the bearing 1, and after the portion 12 has been placed onto the race 2, the lip 36 moves to adjoin the portion 41, thus increasing the value of the axial thrust necessary to mount the portion 13, but once the lip 36 has overcome the barrier defined by the portion 41 itself, and is snap positioned in the receiving seat 42, the value of the above-mentioned axial thrust suddenly decreases highlighting the completed insertion of the tongue 39 into the seat 42 and, thus, the completed correct mounting of the portion 13.

Some interference due to mounting is necessary between the portion 13 and the race 3 and in order to avoid that this create any distortion in the portion 23 which is loaded with magnetic particles, the element 19 presents a bevel 44, which is obtained on the internal diameter of the portion 23 itself in the part opposite that facing the portion 12, and this avoids the formation of any kind of swelling in the portion 23. Furthermore, still with the aim of reducing any deformation in the portion 23, and with the objective of exploiting the necessary interference caused by mounting, the internal race 3 of the bearing 1 presents, from the part facing the exterior, an annular groove 45 suitable of housing the element 19 in order to provide a positive connection between the element 19 and the race 3 itself.

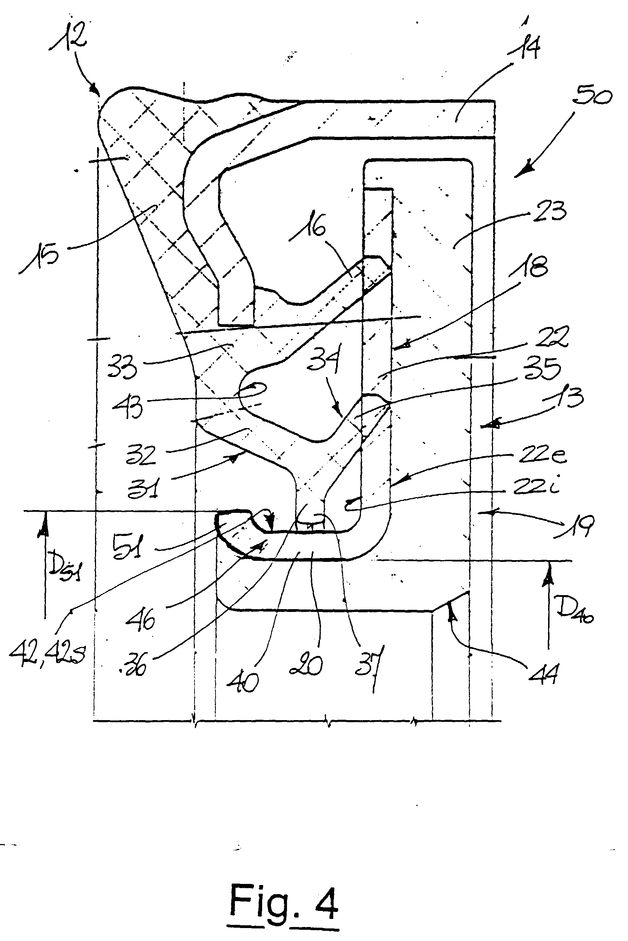

Figure 4 illustrates a sealing device 50 which is substantially similar to the device 30, from which the device 50 differs due to the fact that the cylindrical end portion 41, is replaced by a curved portion 51 directly connected to the portion 40: in this way the seat 42 presents an axial length greater than that of the receiving seat 42 of the device 30 and also permits the eventual realisation of a portion 23 of greater thickness. The portion 51 presents an external diameter D₅₁ which is substantially equal to the diameter D₄₁, and which is, furthermore, always greater than the diameter D₃₉ of the tongue 39.

It is intended that the invention should not be limited to the forms of embodiment described and illustrated here, which are to be considered as examples of the embodiment of the sealing device which, instead, may be liable to further modifications in terms of shape, arrangement, parts and details of construction and function. Finally, the inventive idea may be independently applied to sealing devices with or without an integrated phonic wheel of the type illustrated in the examples discussed above.

## Claims

1. Sealing device (30) for a roller contact bearing (1) having a rotating race (3) and a fixed race (2) coaxially placed in relation to each other and to a rotation axis (A), the sealing device (30) comprising a rotating portion (13) to be mounted so as to rotate rigid with the rotating race (3), and a fixed portion (12) to be mounted so as to rotate rigid with the fixed race (2) and to be coupled with the rotating portion (13); the sealing device (30) being characterised by the fact that it comprises snapping positioning means (46) to position said rotating and fixed portions (13, 12) in relation to one another, positioning means (46) comprising elastic yieldable means (36), and rigid matching means (41) (51) associated with said rotating portion (13).

2. Device according to Claim 1, wherein said positioning means (46) comprise a receiving seat (42) for said elastic yieldable means (36) associated with said rigid matching means (41)(51).

3. Device according to Claim 2, wherein said elastic yieldable means (36) comprise a first hook portion (36) presenting a certain inner diameter; said rigid matching means (41)(51) comprising a second hook portion (41)(51) able to move during an assembling step with respect to the first hook portion (36).

4. Device according to Claim 1, wherein said receiving seat (42) presents an inner diameter smaller than the inner diameter of the said second hook portion (41)(51), and it is axially arranged consecutively to the second hook portion (41)(51).

5. Device according one of the previous Claims, wherein said rotating portion comprehends a metallic annular inset (18) provided with a matching portion (41)(51) and with a receiving seat (42) axially arranged consecutively to the matching portion (41)(51); said elastic means (36) comprising a sealing lip (36) placed inside said receiving seat (42), and being engagable during an assembling step of said matching portion (41)(51).

6. Device according to Claim 5, characterised by the fact that said receiving seat (42) is axially delimited on one side by the said hook portions (41)(51) and, on the opposite side, by a substantially disc-shaped radial wall (22) of the said annular insert (18).

7. Device according to Claim 6, characterised by the fact that said receiving seat (42) presents a bottom surface (42s) with a diameter approximately in excess of an external diameter of said sealing lip (36).

8. Device according to any of the preceding Claims, characterised by the fact that the said rotating portion (13) presents, from the side opposite that facing the said fixed portion (12), an discharging bevel (44).

9. Device according to any of the preceding Claims, characterised by the fact of comprising engaging means (45) interposed between the said internal race (3) and the said rotating portion (13) to positively connect the internal race (3) and the rotating portion (13) in relation to each other.

10. Device according to Claim 9, characterised by the fact that said engaging means (45) are defined by an annular groove (45) obtained on the said rotating race (3) in the side facing the said rotating portion (13).

11. Device according to any of the preceding Claims, characterised by the fact that said fixed portion (12) comprises a first and a second axial sealing element (16, 35) suitable for slidingly contacting said rotating portion (13), and a radial sealing element (36) suitable for slidingly contacting the rotating portion (13) itself, and defining the said elastic yieldable means (36)

12. Device according to Claim 11, characterised by the fact that said fixed portion (12) comprises an elastic support element (32) for the first axial sealing element (35) and for the said radial sealing element (36); the support element (32) extending from a base (33) of the second axial element (16).
